# FASCICULE DE BREVET EUROPEEN

(11) **EP 1 338 491 B1**
(45) Date de publication et mention de la délivrance du brevet: **06.04.2011**
(21) Numéro de dépôt: 03003860.8
(22) Date de dépôt: 20.02.2003
(51) Int. Cl.: B60T 11/232

(54) **Maître-cylindre hydraulique à masquage de course morte**
Hauptbremszylinder mit reduzierten Todweg
Hydraulic master-cylinder with reduced lost motion

(30) Priorité: 25.02.2002 FR 0202446
(43) Date de publication de la demande: 27.08.2003
(73) Titulaire: ROBERT BOSCH GMBH, 70442 Stuttgart (DE)
(72) Inventeur: Lebret, Pierre, 78000 Versailles (FR)
(74) Mandataire: Hurwic, Aleksander Wiktor

(56) Documents cités:
- EP-A- 0 601 769
- WO-A-92/06875
- DE-A- 3 835 396
- DE-A- 4 108 899

## Description

La présente invention concerne un maître-cylindre hydraulique pour circuit de freinage de véhicule automobile.

Le maître-cylindre d'un circuit de freinage de véhicule automobiles est alimenté en liquide hydraulique (liquide de frein) à partir d'un réservoir et est commandé à partir de la pédale de frein pour alimenter en liquide hydraulique sous pression des moyens de serrage des freins des roues du véhicule.

Typiquement, le maître-cylindre comprend un piston (le piston primaire dans le cas d'un maître-cylindre tandem) déplaçable axialement dans une chambre de travail (chambre primaire) par des moyens d'assistance commandés par la pédale de frein, et comporte un passage axial de communication entre la chambre de travail et une chambre d'alimentation reliée au réservoir précité. Un clapet sollicité par un ressort est porté par le piston pour fermer l'extrémité de ce passage qui débouche dans la chambre de travail, après que le piston ait parcouru une course morte à partir de sa position de repos.

La fermeture de ce passage par le clapet permet, la course du piston se poursuivant, de faire monter la pression dans la chambre de travail pour actionner les moyens de serrage des freins. Après un freinage, le piston du maître-cylindre est ramené dans sa position de repos et le clapet rouvre la communication entre la chambre de travail et la chambre d'alimentation reliée au réservoir.

Un tel maître-cylindre est decrit dans DE-A-41 08 899.

L'ouverture du clapet peut aussi être provoquée par une dépression dans la chambre de travail, cette dépression résultant du fonctionnement d'un circuit du type ESP (Electronic Stability Program) de commande sélective des freins, ce circuit comprenant au moins une pompe alimentée en liquide hydraulique par la sortie du maître-cylindre.

Un maître-cylindre tandem comprend une chambre secondaire pour l'alimentation en liquide sous pression d'un circuit secondaire de freinage et un piston secondaire déplaçable dans la chambre secondaire en réponse au déplacement du piston primaire dans la chambre primaire ou chambre de travail précitée. Comme le piston primaire, le piston secondaire comporte un passage de communication entre la chambre secondaire et une chambre d'alimentation en liquide, et un clapet sollicité par un ressort est porté par le piston secondaire pour obturer ce passage pour un freinage, après une course morte du piston secondaire depuis sa position de repos.

On a déjà cherché à réduire et à contrôler les courses mortes des pistons du maître-cylindre, car elles retardent le début du freinage et varient avec les tolérances de fabrication et de montage. Il faut toutefois, pour cela, procéder à des mesures et ajustements sur chaque maître-cylindre, ce qui est relativement long et coûteux.

La présente invention a notamment pour but d'éviter ces inconvénients de la technique antérieure.

Elle propose à cet effet un maître-cylindre hydraulique pour circuit de freinage de véhicule automobile, comprenant au moins un piston déplaçable axialement dans une chambre de travail et formé avec un passage axial de communication entre ladite chambre de travail et une chambre d'alimentation en liquide de frein, et un clapet sollicité par un ressort pour fermer ledit passage quand le piston a parcouru une course morte dans la chambre de travail à partir d'une position de repos, caractérisé en ce qu'il comprend des moyens de masquage de la course morte précitée, permettant de réduire l'écoulement de liquide par le passage précité pour augmenter la pression de liquide dans la chambre de travail pendant la course morte du piston, ces moyens étant portés par le clapet précité.

L'invention permet donc de masquer la course morte du piston en faisant commencer l'augmentation de pression dans la chambre de travail dès le début du déplacement du piston, avant la fin de sa course morte, ce qui a pour avantage de ne pas retarder le début du freinage sans interférer pour autant avec les autres étapes de fonctionnement du maître-cylindre.

Dans un mode de réalisation préféré de l'invention, les moyens de masquage de la course morte comprennent un clapet additionnel sollicité par un ressort pour fermer un conduit d'extrémité du piston dans lequel débouche le passage précité, ce clapet additionnel comportant des moyens permettant un écoulement réduit de liquide dans ledit passage et ledit conduit quand le clapet additionnel est dans sa position de fermeture du conduit.

Avantageusement, ces moyens permettant un écoulement réduit de liquide sont formés par au moins un orifice traversant du clapet additionnel.

Un tel clapet est de préférence constitué par une rondelle qui est montée axialement déplaçable sur une tige axiale solidaire du premier clapet et qui est réalisée en une matière rigide telle que du métal ou une matière plastique résistant au liquide de frein.

Les moyens de masquage de course morte du piston du maître-cylindre selon l'invention sont donc de structure simple, faciles à installer et peu coûteux. Leur mise en place ne nécessite aucune mesure préalable sur le maître-cylindre et leur fonctionnement ne dépend pas des tolérances de fabrication et de montage.

Dans le cas d'un maître-cylindre tandem comprenant des pistons primaire et secondaire déplaçables respectivement dans des chambres primaire et secondaire pour l'alimentation de circuits primaire et secondaire de freinage, avec des clapets portés par les pistons primaire et secondaire et sollicités par des ressorts pour fermer des passages de ces pistons qui relient les chambres primaire et secondaire respectivement à des chambres d'alimentation en liquide de frein, des moyens de masquage des courses mortes des pistons primaire et secondaire sont prévus pour réduire les écoulements de liquide par les passages des pistons primaire et secondaire et augmenter la pression dans les chambres primaire et secondaire pendant ces courses mortes, ces moyens étant portés par les pistons et constitués par des clapets additionnels du même type que celui décrit ci-dessus.

Avantageusement, les clapets des pistons primaire et secondaire du maître-cylindre sont identiques et, de même, les clapets additionnels des moyens de masquage sont identiques.

**L'invention a pour objet un maître-cylindre hydraulique tel que revendiqué dans les revendications.**

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un maître-cylindre tandem selon l'invention;
- la figure 2 est une vue de face d'un clapet additionnel selon l'invention ;
- la figure 3 est une vue partielle en coupe axiale du maître-cylindre, représentant le piston primaire en position avancée ; et
- la figure 4 est une vue semblable à la figure 3, représentant le piston primaire en position de repos et le clapet additionnel ouvert en raison d'une aspiration dans la chambre primaire.

Par convention, on dira dans la description qui suit que ce qui se trouve à gauche sur les dessins est à l'avant et ce qui se trouve à droite est à l'arrière.

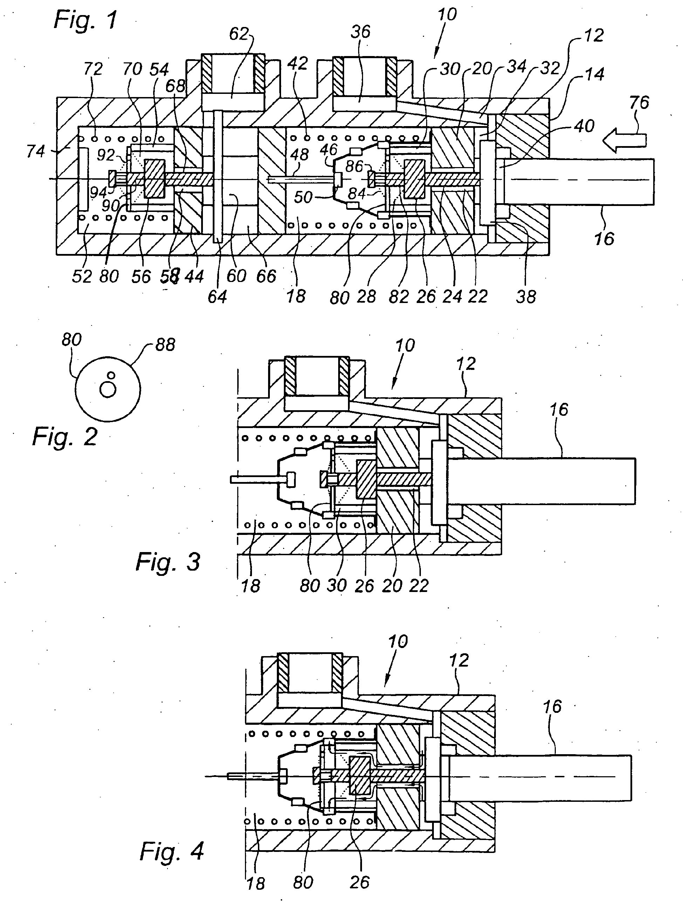

Le maître-cylindre tandem 10 représenté schématiquement en figure 1 comprend un corps cylindrique 12 dont l'extrémité arrière est fermée par une paroi circulaire 14 traversée axialement à étanchéité par un piston primaire 16 dont la partie avant se trouve dans une chambre primaire 18 remplie de liquide de frein et comportant un orifice de sortie (non représenté) raccordé à des moyens de serrage des freins des roues d'un véhicule automobile. La partie avant du piston primaire 16 comporte une tête 20 déplaçable en translation de façon étanche dans la chambre 18 et formée avec un passage axial 22 dans lequel est engagée la tige axiale 24 d'un clapet 26 qui est sollicité vers l'arrière par un ressort 28 dans une position de fermeture du passage 22. L'extrémité avant du ressort 28 prend appui sur la surface interne d'un conduit cylindrique 30 qui est formé à l'extrémité avant du piston primaire 16 et à l'intérieur duquel est logé le clapet 26.

Le passage axial 22 débouche à son extrémité arrière dans une chambre d'alimentation 32 s'étendant entre la tête 20 du piston et la paroi arrière 14 du maître-cylindre 10, cette chambre d'alimentation 32 étant reliée par un conduit 34 du corps 12 à un chambrage 36 destiné à recevoir à étanchéité un embout tubulaire d'un réservoir (non représenté) de liquide de frein.

Une goupille transversale 38 est montée fixement dans la chambre d'alimentation 32 et traverse une lumière 40 de la tige du piston primaire 16, cette goupille 38 limitant le mouvement vers l'avant du piston primaire 16 et formant un appui de la tige de clapet 24 de telle sorte que, dans la position de repos du piston primaire 16 représentée en figure 1, la tête de clapet 26 est écartée de l'extrémité avant du passage 22 et permet une communication entre la chambre primaire 18 et la chambre d'alimentation 32.

Le piston primaire 16 est sollicité vers sa position de repos par un ressort de rappel 42 qui prend appui à son extrémité avant sur l'extrémité arrière du piston secondaire 44 et à son extrémité arrière sur une butée de ressort 46 qui est montée avec jeu sur le conduit 30 du piston primaire et qui prend appui à son extrémité arrière sur la tête de piston 20. La partie avant de la butée de ressort 46 est traversée par une tige axiale 48 dont l'extrémité avant est fixée, par exemple par vissage, sur la face arrière du piston secondaire 44 et dont l'extrémité arrière comporte une tête 50 de retenue de l'extrémité avant de la butée de ressort 46. Cette disposition permet de fixer la longueur au repos de la chambre primaire 18 et la précontrainte du ressort de rappel 42.

Comme le piston primaire 16, le piston secondaire 44 est monté coulissant à étanchéité dans une chambre secondaire 52 comportant une sortie (non représentée) raccordée aux moyens d'actionnement des freins des roues du véhicule. L'extrémité avant du piston secondaire 44 est solidaire d'un conduit axial cylindrique 54 entourant un clapet dont la tête 56 est destinée à fermer de façon étanche un passage axial 58 du piston secondaire, qui établit une communication entre la chambre secondaire 52 et une chambre d'alimentation 60 reliée à un chambrage 62 du corps cylindrique 12 du maître-cylindre destiné à recevoir un embout tubulaire du réservoir de liquide de frein.

Une goupille transversale 64 montée fixement dans la chambre d'alimentation 60 traverse avec jeu une lumière 66 du piston secondaire 44 et forme une butée pour la tige axiale 68 du clapet 56 pour maintenir ce clapet en position d'ouverture du passage axial 58 quand le piston secondaire est dans sa position de repos représentée en figure 1.

Le clapet 56 est sollicité en position de fermeture du passage 58 par un ressort 70 dont l'extrémité avant prend appui sur la face interne du conduit cylindrique 54. Un ressort 72 de rappel du piston secondaire dans sa position de repos prend appui à son extrémité avant sur la paroi avant 74 du maître-cylindre 10 et à son extrémité arrière sur le piston secondaire 44. De préférence, la précontrainte du ressort 72 dans la position de repos de la figure 1 est inférieure à celle du ressort 42 de rappel du piston primaire.

Ce maître-cylindre fonctionne de la façon suivante :
quand le conducteur du véhicule appuie sur la pédale de frein pour le freinage du véhicule, l'effort appliqué à la pédale de frein est amplifié par un servomoteur d'assistance pneumatique et transmis au piston primaire 16 du maître-cylindre qui est déplacé vers l'avant dans le sens indiqué par la flèche 76 et qui déplace vers l'avant le piston secondaire 44. Dans la position de repos représentée en figure 1, les passages axiaux 22 et 58 des pistons primaire 16 et secondaire 44 sont ouverts et le début du déplacement vers l'avant des pistons primaire 16 et secondaire 44 ne provoque pas d'augmentation de pression dans les chambres primaire 18 et secondaire 52, le liquide de frein contenu dans la chambre secondaire 52 pouvant s'écouler vers la chambre d'alimentation 66 par le passage axial 58 du piston secondaire 44.

Quand le piston secondaire 44 arrive au contact de la tête de clapet 56, le passage axial 58 de communication entre la chambre secondaire 52 et la chambre d'alimentation 66 est fermé de façon étanche et le déplacement vers l'avant du piston secondaire provoque alors une augmentation de pression dans la chambre secondaire 52. La force générée par cette augmentation de pression commence par compenser la différence de précontrainte des ressorts 42 et 72 puis crée une réduction du volume de la chambre primaire 18, d'abord sans augmentation de pression dans la chambre primaire 18 tant que la tête du clapet 26 reste à distance de l'extrémité avant du passage axial 22, puis, ce passage étant obturé à étanchéité par la tête de clapet, le déplacement relatif vers l'avant du piston primaire 16 provoque une augmentation de pression dans la chambre primaire 18.

L'augmentation de pression dans les chambres 18 et 52 est transmise aux moyens de serrage des freins des roues du véhicule.

Quand le conducteur cesse d'appuyer sur la pédale de frein, la pression du liquide de frein dans les chambres 18 et 52 et les ressorts de rappel 42 et 72 ramènent les pistons primaire et secondaire 16, 44 vers leur position de repos, les tiges de clapet 24 et 68 reviennent en appui sur les goupilles 28, 64 respectivement, des communications sont à nouveau établies entre les chambres 18 et 32 ainsi qu'entre les chambres 52 et 60, et les divers composants du maître cylindre reviennent dans leurs positions de repos représentées en figure 1.

Les courses mortes du piston primaire 16 et du piston secondaire 44 retardent le début du freinage, puisque aucune augmentation de pression n'a lieu dans les chambres 18 et 52 avant la fermeture des passages axiaux 22 et 58 par les têtes des clapets 26 et 56. Ces courses mortes dépendent des tolérances de fabrication et de montage des maîtres-cylindres et il est difficile de les contrôler de façon précise.

L'invention propose de les masquer en utilisant pour cela des moyens simples, efficaces et peu coûteux, comprenant des clapets additionnels qui sont montés sur les clapets 26, 56 précités et qui ont pour fonction de réduire l'écoulement de liquide de frein par les passages axiaux 22 du piston primaire 16 et 58 et du piston secondaire 44 pendant les courses mortes de ces derniers.

Le clapet additionnel monté sur le clapet 26 du piston primaire 16 comprend une rondelle transversale 80 déplaçable sur une tige axiale 82 portée par le clapet 26 et s'étendant vers l'avant depuis la tête du clapet, la rondelle 80 ayant un diamètre extérieur supérieur au diamètre interne du conduit cylindrique 30 du piston primaire 16 de façon à pouvoir obturer ce conduit de façon sensiblement étanche. Un ressort 84 prenant appui à son extrémité avant sur une tête avant 86 de la tige axiale 82 et à son extrémité arrière sur la rondelle 80 sollicite celle-ci vers sa position d'obturation du conduit 30. Un orifice traversant 88 de la rondelle 80 permet un écoulement de liquide de frein à débit réduit entre la chambre 18 et l'intérieur du conduit 30 quand la rondelle 80 du clapet additionnel est en position d'obturation de ce conduit.

De même, le clapet 56 du piston secondaire 44 est équipé d'un clapet additionnel, avantageusement identique à celui du clapet du piston primaire, ce clapet additionnel comprenant une autre rondelle 80 déplaçable sur une tige axiale 90 s'étendant vers l'avant depuis la tête du clapet 56 et sollicitée par un ressort 92 pour venir obturer de façon sensiblement étanche l'extrémité avant du conduit cylindrique 54 du piston secondaire 44. Le ressort 92 prend appui à son extrémité avant sur une tête avant 94 de la tige axiale 90 et à son extrémité arrière sur la rondelle 80. Celle-ci comporte un orifice traversant 88 qui permet un écoulement de liquide de frein à débit réduit de la chambre secondaire 52 dans le conduit 54.

Ces clapets additionnels fonctionnent de la façon suivante :
dans la position de repos représentée en figure 1, les rondelles 80 des clapets additionnels ferment de façon sensiblement étanche les conduits 30 du piston primaire 16 et 54 du piston secondaire 44.

Comme déjà décrit, les têtes des clapets 26 et 56 restent écartées des extrémités avant des passages axiaux 22 et 58 respectivement du piston primaire et du piston secondaire. Lorsque le conducteur appuie sur la pédale de frein et que les pistons primaire et secondaire commencent leur déplacement vers l'avant et parcourent le début de leur course morte, le débit forcé de liquide de frein par l'orifice traversant 88 de la rondelle 80 se traduit par une augmentation de la pression de la chambre secondaire 52 dès le début du déplacement vers l'avant des pistons primaire et secondaire à partir de leur position de repos. L'augmentation de pression dans la chambre 52 provoque une diminution du volume de la chambre primaire 18, ce qui se traduit par une augmentation de pression dans la chambre primaire 18, en raison de l'obturation du conduit 30 par la rondelle 80 du additionnel 80'porté par le clapet 26.

Dans la position de freinage représentée en figure 3, le passage axial 22 de la tête du piston primaire est obturé par la tête du clapet 26 et le conduit 30 contenant cette tête de clapet reste obturé par la rondelle 80 du clapet additionnel.

Lorsque le véhicule automobile est équipé d'un circuit du type ESP, le fonctionnement de ce circuit nécessite l'alimentation d'une pompe en liquide de frein fourni par la sortie du maître-cylindre 10. Cette alimentation provoque une dépression dans les chambres primaire 18 et secondaire 52 du maître-cylindre et l'ouverture des clapets additionnels et des clapets 26 du piston primaire et 56 du piston secondaire, comme représenté schématiquement en figure 4 pour le piston primaire, cette ouverture permettant l'alimentation en liquide de frein de la pompe du circuit ESP à partir du réservoir relié au maître cylindre 10.

Les rondelles 80 des clapets additionnels sont réalisées en une matière rigide, par exemple métallique ou plastique, qui résiste au liquide de frein. Les pressions subies par les clapets additionnels sont relativement faibles et limitées aux pressions développées dans les chambres 18 et 52 pendant les courses mortes des pistons primaire et secondaire, ces pressions étant par exemple de l'ordre de 10 bars au maximum. Les trous 88 des rondelles 80 permettent un écoulement de liquide de frein des chambres 18 et 52 vers le réservoir en cas de dilatation thermique du liquide de frein. Par exemple, les diamètres de ces trous sont compris entre 0,4 et 0,6 mm environ et peuvent varier en fonction des jeux entre les rondelles 80 et les tiges axiales 82, 90 sur lesquelles ces rondelles sont axialement déplaçables.

## Revendications

1. Maître-cylindre hydraulique pour circuit de freinage de véhicule automobile, comprenant au moins un piston (16, 44) déplaçable axialement dans une chambre de travail (18, 52) et formé avec un passage axial (22, 58) de communication entre ladite chambre de travail (18, 52) et une chambre (32, 60) d'alimentation en liquide de frein, et un clapet (26, 56) sollicité par un ressort (28, 70) pour fermer ledit passage quand le piston (16, 44) a parcouru une course morte dans ladite chambre de travail (18, 52) à partir d'une position de repos, **caractérisé en ce qu'**il comprend des moyens (80) de masquage de la course morte précitée, permettant de réduire l'écoulement de liquide par le passage axial (22, 58) précité pour augmenter la pression dans la chambre de travail (18, 52) pendant la course morte du piston, ces moyens étant portés par le clapet (26, 56) et **en ce que** les moyens de masquage de la course morte comprennent un clapet additionnel (80) sollicité par un ressort (84, 92) dans une position de fermeture d'un conduit (30, 54) d'extrémité du piston (16, 44), ledit clapet additionnel comportant des moyens (88) permettant un écoulement réduit de liquide dans ledit conduit (30, 54) lorsque celui-ci est obturé par le clapet additionnel (80).

2. Maître-cylindre selon la revendication 1, **caractérisé en ce que** ledit clapet additionnel (80) comporte au moins un orifice traversant (88) pour l'écoulement réduit du liquide.

3. Maître-cylindre selon l'une des revendications précédentes, **caractérisé en ce que** le clapet (26, 56) de fermeture du passage axial (22, 58) du piston (16, 44) est logé à l'intérieur du conduit d'extrémité (30, 54) dudit piston.

4. Maître-cylindre selon l'une des revendications 2 à 3, **caractérisé en ce que** le clapet additionnel comprend une rondelle (80) déplaçable sur une tige axiale (82) solidaire du clapet (26, 56) de fermeture du passage axial (22, 58) du piston (16, 44).

5. Maître-cylindre selon l'une des revendications précédentes, comprenant un piston primaire (16) et un piston secondaire (44) déplaçables respectivement dans une chambre primaire (18) et dans une chambre secondaire (52) pour l'alimentation de circuits primaire et secondaire de freinage, des clapets (26, 56) portés par les pistons primaire et secondaire et sollicités par des ressorts (28, 70) pour fermer des passages axiaux des pistons primaire et secondaire qui relient les chambres primaire et secondaire (18, 52) à des chambres (32, 60) d'alimentation en liquide de frein, **caractérisé en ce qu'**il comprend des moyens (80) de masquage des courses mortes des pistons primaire (16) et secondaire (44), permettant de réduire l'écoulement de liquide par les passages axiaux (22, 58) de ces pistons pour augmenter la pression dans les chambres secondaire primaire (18) et secondaire (52), ces moyens étant portés par les clapets (26, 56) desdits pistons.

6. Maître-cylindre selon l'une des revendications 2 à 5, **caractérisé en ce que** le ou chaque clapet additionnel (80) est en une matière rigide, par exemple métallique ou plastique, résistant au liquide de frein.

7. Maître-cylindre selon l'une des revendications 3 à 6, **caractérisé en ce que** l'orifice traversant (88) du clapet additionnel (80) a un diamètre compris entre 0,4 et 0,6 mm environ.

8. Maître-cylindre selon l'une des revendications 6 à 7, **caractérisé en ce que** les moyens (80) de masquage des courses mortes des pistons primaire (16) et secondaire (44) sont identiques.

## Claims

1. Hydraulic master cylinder for a motor vehicle braking circuit, comprising at least one piston (16, 44) that can move axially in a working chamber (18, 52) and is formed with an axial passage (22, 58) for communication between said working chamber (18, 52) and a brake fluid supply chamber (32, 60), and a valve shutter (26, 56) urged by a spring (28, 70) to close said passage when the piston (16, 44) has covered a dead travel in said working chamber (18, 52) starting from a position of rest, **characterized in that** it comprises means (80) of concealing the aforesaid dead travel making it possible to reduce the flow of fluid through the aforesaid axial passage (22, 58) so as to increase the pressure in the working chamber (18, 52) during the dead travel of the piston, these means being borne by the valve shutter (26, 56), and **in that** the means of concealing the dead travel comprise an additional valve shutter (80) urged by a spring (84, 92) into a position in which it closes a duct (30, 54) in the end of the piston (16, 44), said additional valve shutter comprising means (88) allowing a reduced flow of fluid in said duct (30, 54) when the latter is closed off by the additional valve shutter (80).

2. Master cylinder according to claim 1, **characterized in that** said additional valve shutter (80) has at least one through-orifice (88) for the reduced flow of the fluid.

3. Master cylinder according to one of the preceding claims, **characterized in that** the valve shutter (26, 56) for closing the axial passage (22, 58) in the piston (16, 44) is housed inside the end duct (30, 54) of said piston.

4. Master cylinder according to one of claims 2 to 3, **characterized in that** the additional valve shutter comprises a washer (80) which can be moved on an axial rod (82) secured to the valve shutter (26, 56) for closing the axial passage (22, 58) in the piston (16, 44).

5. Master cylinder according to one of the preceding claims, comprising a primary piston (16) and a secondary piston (44) which are able to move respectively in a primary chamber (18) and in a secondary chamber (52) to supply primary and secondary braking circuits, valve shutters (26, 56) borne by the primary and secondary pistons and urged by springs (28, 70) to close axial passages in the primary and secondary pistons which connect the primary and secondary chambers (18, 52) to brake fluid supply chambers (32, 60), **characterized in that** it comprises means (80) for concealing the dead travels of the primary (16) and secondary (44) pistons making it possible to reduce the flow of fluid through the axial passages (22, 58) in these pistons so as to increase the pressure in the primary (18) and secondary (52) chambers, these means being borne by the valve shutters (26, 56) of said pistons.

6. Master cylinder according to one of claims 2 to 5, **characterized in that** the or each additional valve shutter (80) is made of a rigid material, for example of a metal or plastic resistant to brake fluid.

7. Master cylinder according to one of claims 3 to 6, **characterized in that** the through-orifice (88) in the additional valve shutter (80) has a diameter of between about 0.4 and 0.6 mm.

8. Master cylinder according to one of claims 6 to 7, **characterized in that** the means (80) of concealing the dead travels of the primary (16) and secondary (44) pistons are identical.

## Patentansprüche

1. Hydraulischer Hauptzylinder für einen Bremskreis eines Kraftfahrzeugs, mit mindestens einem in einer Arbeitskammer (18, 52) axial beweglichen Kolben (16, 44), der mit einem axialen Verbindungsdurchgang (22, 58) zwischen der Arbeitskammer (18, 52) und einer Versorgungkammer (32, 60) für die Bremsflüssigkeit ausgebildet ist, und mit einem Ventilelement (26, 56), das von einer Feder (28, 70) beaufschlagt ist, um den Durchgang zu schließen, wenn der Kolben einen Totgang in der Arbeitskammer ausgehend von einer Ruhestellung durchlaufen hat, **dadurch gekennzeichnet, dass** er Mittel zum Ausblenden (80) des Totgangs aufweist, die es ermöglichen, das Strömen der Flüssigkeit durch den axialen Durchgang (22, 58) zu reduzieren, um den Druck in der Arbeitskammer (18, 52) während des Totgangs des Kolbens zu erhöhen, wobei diese Mittel vom Ventilelement (26, 56) getragen werden, und dass die Mittel zum Ausblenden des Totgangs ein zusätzliches Ventilelement (80) umfassen, das von einer Feder (84, 92) in eine Schließstellung einer Endleitung (30, 54) des Kolbens (66, 44) beaufschlagt ist, wobei das zusätzliches Ventilelement (80) Mittel (88) aufweist, die ein reduziertes Strömen der Flüssigkeit in der Leitung (30, 54) ermöglichen, wenn diese Leitung durch das zusätzliche Ventilelement (80) verschlossen ist.

2. Hauptzylinder nach Anspruch 1, **dadurch gekennzeichnet, dass** das zusätzliches Ventilelement (80) mindestens eine durchgehende Bohrung (88) für das reduzierte Strömen der Flüssigkeit aufweist.

3. Hauptzylinder nach einem der vorhergehenden Ansprüchen, **dadurch gekennzeichnet, dass** das Ventilelement (26, 56) zum Verschließen des axialen Durchgangs (22, 58) des Kolbens (16, 44) innerhalb der Endleitung (30, 54) des Kolbens aufgenommen ist.

4. Hauptzylinder nach einem der Ansprüche 2 bis 3, **dadurch gekennzeichnet, dass** das zusätzliches Ventilelement eine Scheibe (80) aufweist, die auf einer axialen Stange (82) verschiebbar ist, die mit dem Ventilelement (26, 56) zum Verschließen des axialen Durchgangs (22, 58) des Kolbens (16, 44) fest verbunden ist.

5. Hauptzylinder nach einem der vorhergehenden Ansprüche, mit einem Primärkolben (16) und einem Sekundärkolben (44), die jeweils in einer Primärkammer (18) bzw. einer Sekundärkammer (52) zur Versorgung eines Primär- und eines Sekundärbremskreises verschiebbar sind, mit Ventilelementen (26, 56), die vom Primär- bzw. Sekundärkolben getragen sind, um axiale Durchgänge des Primär- bzw. Sekundärkolbens zu verschließen, die die Primär- bzw. Sekundärkammer (18, 52) mit Versorgungskammern (32, 60) für die Bremsflüssigkeit verbinden, **dadurch gekennzeichnet, dass** er Mittel (80) zum Ausblenden der Totgänge des Primärkolben (16) und des Sekundärkolbens (44) aufweist, die es ermöglichen, das Strömen der Flüssigkeit durch die axialen Durchgänge (22, 58) dieser Kolben zu reduzieren, um den Druck in der Primärkammer (18) und Sekundärkammer (52) zu erhöhen, wobei diese Mittel durch die Ventilelemente (26, 56) der Kolben getragen sind.

6. Hauptzylinder nach einem der Ansprüche 2 bis 5, **dadurch gekennzeichnet, dass** das oder jedes zusätzliches Ventilelement (80) aus einem starren Material, beispielsweise aus Metall oder Kunststoff, besteht, das/der gegen die Bremsflüssigkeit resistent ist.

7. Hauptzylinder nach einem der Ansprüche 3 bis 6, **dadurch gekennzeichnet, dass** die durchgehende Bohrung (88) des Ventilelements (26, 56) einen Durchmesser zwischen ca. 0,4 und 0,6 mm hat.

8. Hauptzylinder nach einem der Ansprüche 6 bis 7, **dadurch gekennzeichnet, dass** die Mittel zum Ausblenden (80) der Totgänge des Primärkolbens (16) und Sekundärkolbens (44) identisch sind.
